(19)

Europäisches
Patentamt
European
Patent Office
Office européen
des brevets

(11) **EP 2 421 138 A1**

(12) **EUROPEAN PATENT APPLICATION**

(43) Date of publication:
**22.02.2012 Bulletin 2012/08**

(51) Int Cl.:
*H02M 3/335* (2006.01)

(21) Application number: **10173167.7**

(22) Date of filing: **18.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **ABB Oy
00380 Helsinki (FI)**

(72) Inventors:
• **Suntio, Teuvo
37120, Nokia (FI)**

• **Huusari, Juha
33720, Tampere (FI)**

(74) Representative: **Valkeiskangas, Tapio Lassi
Paavali
Kolster Oy Ab
Iso Roobertinkatu 23
P.O. Box 148
00121 Helsinki (FI)**

(54) **Transformer-isolated switching converter**

(57) The present invention provides a transformer-isolated current-fed quadratic full-bridge converter topology. The optimal interfacing of a current source (2), such as a solar panel, can be implemented by using current-fed converters. A current-fed converter (1) according to the present invention can operate within the whole range of a UI curve from short-circuit to open-circuit condition and its input voltage can be readily controlled. The quadratic behaviour between input and output in regard of a duty cycle allows conversion ratios which are larger than those with a conventional converter. High-frequency transformer (T) isolation solves the problems associated with the common mode currents.

Figure 1

EP 2 421 138 A1

**Description**

FIELD OF THE INVENTION

The present invention relates to switching converters, and particularly to converters interfacing solar generators.

BACKGROUND OF THE INVENTION

The new forms of power generation and storage have also introduced a need for ways to interface with them. Power may have to be converted into a more usable form. Solar power generation is an example of this.

A solar panel is typically an array of series/parallel-connected solar cells. The voltage produced by it is typically too low to be used directly in an application for supplying electricity to the grid. On the other hand, the voltage may be too high to be fed directly to a battery or array of batteries. In addition to this, the power output of a solar panel depends greatly on the lighting conditions. As a result, the output power of a solar panel may rapidly fluctuate considerably.

Therefore, implementation of modular solar energy systems where solar panels or a group of panels are directly connected to a low voltage or a high voltage bus usually requires use of a maximum-power-point-tracking (MPPT) converter with a large conversion ratio. The converter converts the voltage produced by the solar panels into another voltage which is more suitable for the application. A conventional way to interface with solar panels is to use a voltage-fed switching converter.

A disadvantage associated with the above arrangement is that it has a limited operational range. The application may have to operate under conditions where a greater operational range is required. The solar systems are also known to be sensitive to common mode currents, which can reduce the useful life of the solar cells and cause human safety issues when using conventional converters.

BRIEF DESCRIPTION OF THE INVENTION

An object of the present invention is to provide a method and an apparatus so as to overcome the above problem. The object of the invention is achieved by a method and an apparatus which are characterized by what is stated in the independent claims. Preferred embodiments of the invention are disclosed in the dependent claims.

The invention is based on the idea of using a transformer-isolated current-fed quadratic full-bridge converter topology. The optimal interfacing of a current source, such as a solar panel, can be implemented by using current-fed converters.

A current-fed converter can, in principle, operate from short-circuit to open-circuit condition. Its input voltage can also be controlled. The quadratic behaviour allows conversion ratios which are larger than those with a conventional converter.

High-frequency transformer isolation will also solve the problems associated with the common mode currents.

BRIEF DESCRIPTION OF THE DRAWINGS

In the following, the invention will be described in greater detail by means of preferred embodiments with reference to the accompanying drawings, in which

Figure 1 illustrates a power stage of a switching converter according to the present invention;
Figure 2 illustrates polarities of relevant currents and voltages of a power stage of a switching converter according to the present invention;
Figure 3 illustrates a first on-time state circuit structure of a switching converter according to the present invention;
Figure 4 illustrates an off-time state circuit structure of a switching converter according to the present invention;
Figure 5 illustrates a second on-time state circuit structure of a switching converter according to the present invention;
Figure 6 illustrates approximate waveforms of capacitor voltages and inductor currents, and
Figure 7 illustrates an embodiment of the present invention.

DETAILED DESCRIPTION OF THE INVENTION

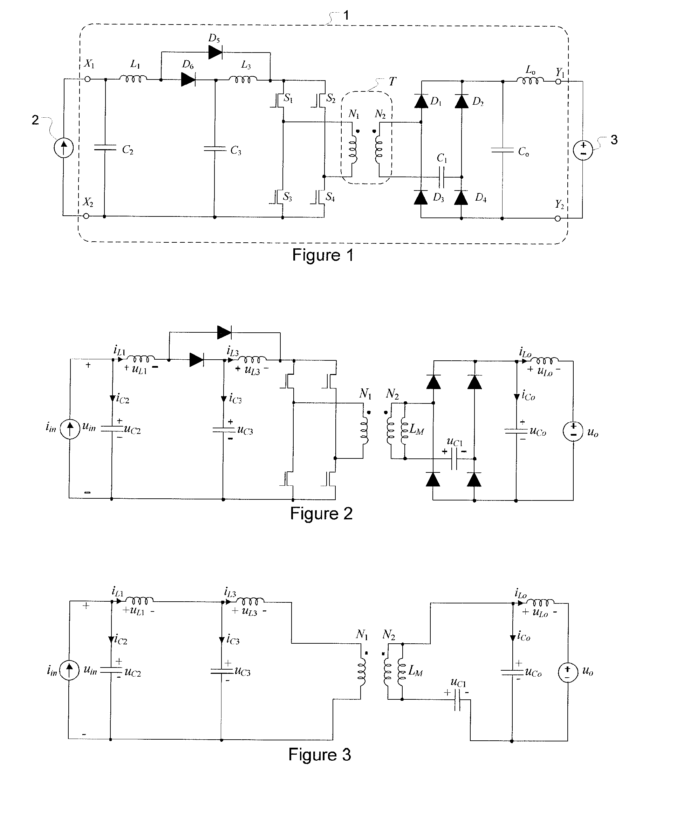

Figure 1 illustrates a power stage of a switching converter 1 according to the present invention. The invention is based on the idea of using a transformer-isolated current-fed quadratic full-bridge converter topology.

A current-fed converter can, in principle, operate within the whole range of a UI curve of a current source from short-circuit to open-circuit condition, and its input voltage can be readily controlled. The quadratic behaviour between input and output in regard of a duty cycle allows conversion ratios which a larger than those with a conventional converter.

The switching converter 1 comprises a first input terminal $X_1$ and a second input terminal $X_2$, which both are adapted to be connected to a current source 2. The current source 2 may, for instance, be a solar panel or a group of solar panels. The current source may also be a Superconducting Magnetic Energy Storage (SMES).

The switching converter 1 also comprises a first output terminal $Y_1$ and a second output terminal $Y_2$, both adapted to be connected to a load 3. The load may, for instance, be a high voltage or a low voltage DC bus.

The switching converter 1 further comprises a transformer $T$ with a primary winding, a secondary winding and a galvanic isolation between the windings, wherein the primary winding comprises two terminals and the secondary winding comprises two terminals. By modifying the turns ratio $n$ between the windings of the transformer, different conversion ratios between the input and the output may be achieved. High-frequency transformer isolation also solves the problems associated with the common mode currents.

A primary side first capacitor $C_2$ is connected between the first input terminal $X_1$ and the second input terminal $X_2$. A primary side first inductor $L_1$ with two terminals is connected from its first terminal to the first input terminal $X_1$. Together they form an input EMI filter.

The switching converter 1 also comprises a primary side second inductor $L_3$ with two terminals. A primary side first rectifying device $D_5$ is connected between the primary side first inductor $L_1$ second terminal and the primary side second inductor $L_3$ second terminal, thus allowing a flow of current from the primary side first inductor $L_1$ second terminal to the primary side second inductor $L_3$ second terminal. The primary side first and second rectifying device may for instance be diodes, as in Figure 1.

A primary side second rectifying device $D_6$ is connected between the primary side first inductor $L_1$ second terminal and the primary side second inductor $L_3$ first terminal, thus allowing a flow of current from the primary side first inductor $L_1$ second terminal to the primary side second inductor $L_3$ first terminal.

A primary side second capacitor $C_3$ is connected between the second inductor $L_3$ first terminal and the second input terminal $X_2$.

The converter 1 also comprises four switching devices $S_1$, $S_2$, $S_3$, and $S_4$ , which form a full bridge. The switching devices may, for instance, be power MOSFETs or IGBTs. The first switching device $S_1$ is connected between the primary side second inductor $L_3$ second terminal and the transformer T primary winding first terminal, and is adapted to be able to set the connection between the primary side second inductor $L_3$ second terminal and the transformer T primary winding first terminal to a conducting and a non-conducting state.

In a similar manner, the second switching device $S_2$ is connected between the primary side second inductor $L_3$ second terminal and the transformer T primary winding second terminal, and is adapted to be able to set the connection between the primary side second inductor $L_3$ second terminal and the transformer T primary winding second terminal to a conducting and a non-conducting state.

The third switching device $S_3$ is connected between the transformer $T$ primary winding first terminal and the second input terminal $X_2$. and is adapted to be able to set the connection between the transformer T primary winding first terminal and the second input terminal $X_2$ to a conducting and a non-conducting state.

The fourth switching device $S_4$ is connected between the transformer $T$ primary winding second terminal and the second input terminal $X_2$ and is adapted to be able to set the connection between the transformer T primary winding second terminal and second input terminal $X_2$ to a conducting and a non-conducting state.

The transformer T secondary winding side comprises a secondary side rectifying means for rectifying the current of the transformer T secondary winding, and a secondary side filtering means for filtering the rectified current.

The transformer $T$ has two secondary winding terminals in Figure 1. Other secondary windings, for instance a secondary winding with a center tap, may be also used.

In Figure 1, a secondary side first inductor $L_o$ with two terminals is connected from its second terminal to the first output terminal $Y_1$. A secondary side first capacitor $C_o$ is connected between the secondary side first inductor $L_o$ first terminal and the second output terminal $Y_2$. Together the secondary side first inductor $L_o$ and the secondary side first capacitor $C_o$ form an EMI filter in the output. Other filter topologies may also be used in a converter according to the present invention.

The topology of the rectifier means depends on the type of the transformer T secondary winding. In Figure 1, the converter 1 also comprises four secondary side rectifying devices $D_1$, $D_2$, $D_3$, and $D_4$ as the rectifying means. The rectifying devices form a rectifying bridge, which rectifies the current from the transformer T. In Figure 1, the rectifying devices are illustrated as diodes.

In Figure 1, the secondary side first rectifying device $D_1$ is connected between the transformer T secondary winding first terminal and the secondary side first inductor $L_o$ first terminal, thus allowing a flow of current from the transformer T secondary winding first terminal to the secondary side first inductor $L_o$ first terminal.

The secondary side second rectifying device $D_2$ is connected between the transformer T secondary winding second terminal and the secondary side first inductor $L_o$ first terminal, thus allowing a flow of current from the transformer T secondary winding second terminal to the secondary side first inductor $L_o$ first terminal.

The secondary side third rectifying device $D_3$ is connected between the second output terminal $Y_2$ and the

transformer $T$ secondary winding first terminal, thus allowing a flow of current from the second output terminal $Y_2$ to the transformer T secondary winding first terminal.

The secondary side fourth rectifying device $D_4$ is connected between the second output terminal $Y_2$ and the transformer $T$ secondary winding second terminal, thus allowing a flow of current from the second output terminal $Y_2$ to the transformer $T$ secondary winding second terminal.

The connection between the transformer T secondary winding second terminal and the secondary side second and fourth rectifying device $D_2$ and $D_4$ may also comprise a secondary side second capacitor $C_1$, as in Figure 1. The secondary side second capacitor $C_1$ is connected from its first terminal to the transformer T secondary winding second terminal. It provides voltage balancing for the transformer $T$.

The converter 1 also comprises means for controlling the voltage between the input terminals.

Figure 2 illustrates polarities of the relevant currents and voltages of a power stage of a converter according to the present invention. The transformer T is represented in Figure 2, as in following Figures 3, 4, and 5, by an ideal transformer with a magnetizing inductor $L_M$ between the terminals of the ideal transformer secondary winding.

The converter according to the present invention has three operational states: a first on-time state, an off-time state, and a second on-time state.

During the on-time 1, the controlled switching devices $S_2$, $S_3$ and the rectifying devices $D_2$, $D_3$, and $D_5$ are non-conducting and the switching devices $S_1$, $S_4$ as well as the rectifying devices $D_1$, $D_4$ and $D_6$ are conducting, resulting in a first on-time state circuit structure illustrated in Figure 3.

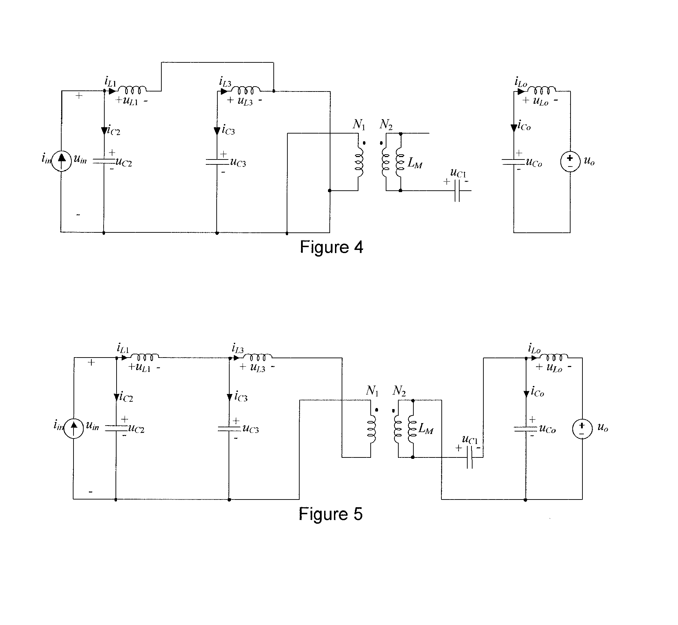

During the off-time state, all of the controlled switching devices and the rectifying device $D_5$ are conducting while the rest of the rectifying devices are off, resulting in an off-time circuit structure illustrated in Figure 4.

The off-time state is followed by the second on-time state, illustrated in Figure 5, during which the circuit structure is otherwise identical to that shown in Figure 3 except that the other switching device pair $S_1$, $S_4$ is conducting. A complete operation cycle consists of two off-time state cycles and of one first on-time state and one second on-time 2 state cycle.

The secondary side second capacitor $C_1$ provides Vs-balance of a transformer magnetizing inductor $L_M$. Assuming that the average DC voltage of the secondary side second capacitor $C_1$ is negligible, the converter has two sub-circuits, since the on-time state sub-circuits are identical. Hence, by applying Kirchhoff's laws, the following can be calculated for the on-time states:

$$
\begin{aligned}
u_{L1} &= u_{C2} - u_{C3} \\
u_{L3} &= u_{C3} - n u_{Co} \\
u_{Lo} &= u_{C3} - u_{o} \\
i_{C2} &= i_{in} - i_{L1} \\
i_{C3} &= i_{L1} - i_{L3} \\
i_{Co} &= n i_{L3} - i_{Lo} \\
u_{in} &= u_{C2} \\
i_{o} &= i_{Lo},
\end{aligned}
\tag{1}
$$

where the main transformer turns ratio $n$ is defined as

$$
n = \frac{N_1}{N_2}.
\tag{2}
$$

Similarly, the following can be calculated for the off-time state:

$$u_{L1} = u_{C2}$$
$$u_{L3} = u_{C3}$$
$$u_{Lo} = u_{C3} - u_o$$
$$i_{C2} = i_{in} - i_{L1}$$
$$i_{C3} = -i_{L3} \qquad (3)$$
$$i_{Co} = -i_{Lo}$$
$$u_{in} = u_{C1}$$
$$i_o = i_{Lo}.$$

According to (1) and (3), average voltages across the inductors, average currents through the capacitors as well as an average output current and an average input voltage become as

$$\langle u_{L1} \rangle = \langle u_{C2} \rangle - d \langle u_{C3} \rangle$$
$$\langle u_{L3} \rangle = \langle u_{C3} \rangle - dn \langle u_{Co} \rangle$$
$$\langle u_{L3} \rangle = \langle u_{C3} \rangle - \langle u_o \rangle$$
$$\langle i_{C2} \rangle = \langle i_{in} \rangle - \langle i_{L1} \rangle$$
$$\langle i_{C3} \rangle = d \langle i_{L1} \rangle - \langle i_{L2} \rangle \qquad (4)$$
$$\langle i_{Co} \rangle = dn \langle i_{L3} \rangle - \langle i_{Lo} \rangle$$
$$\langle u_{in} \rangle = \langle u_{C2} \rangle$$
$$\langle i_o \rangle = \langle i_{Lo} \rangle.$$

where angle brackets $\langle \, \rangle$ denote an average over time and d denotes a duty ratio.
In order to maintain flux linkage and charge balances, the average voltages across the inductors and the average currents through the capacitors must equal zero. According to these principles, operating-point-related steady-state variables are given as

$$U_{C2} = nD^2 U_o$$
$$U_{C3} = nD U_o$$
$$U_{Co} = U_o$$
$$I_{L1} = I_{in}$$
$$I_{L3} = D I_{in} \qquad (5)$$
$$I_{Lo} = nD^2 I_{in}$$
$$I_o = nD^2 I_{in}$$
$$U_{in} = nD^2 U_o,$$

which indicate that the input-to-output and output-to-input relations are functions of the quadratic duty ratio $D^2$ as well

as the transformer turns ratio $n$. The switching frequency of the converter is assumed to be $f_s$ and consequently, the switching period $T_s = 1 / f_s$. The duty cycle $D = T_{on}/T_s$ and therefore, the length of on-time $T_{on}$ $DT_s$ and the length of off-time $T_{off} = (1-D)T_s$ because $T_s = T_{on}+T_{off}$. An operational cycle has two switching cycles, since it takes two complete switching cycles to obtain magnetizing flux balance. A switching cycle comprises an off-time state cycle and an on-time state cycle. The on-time state cycle is either a first or a second on-time state cycle.

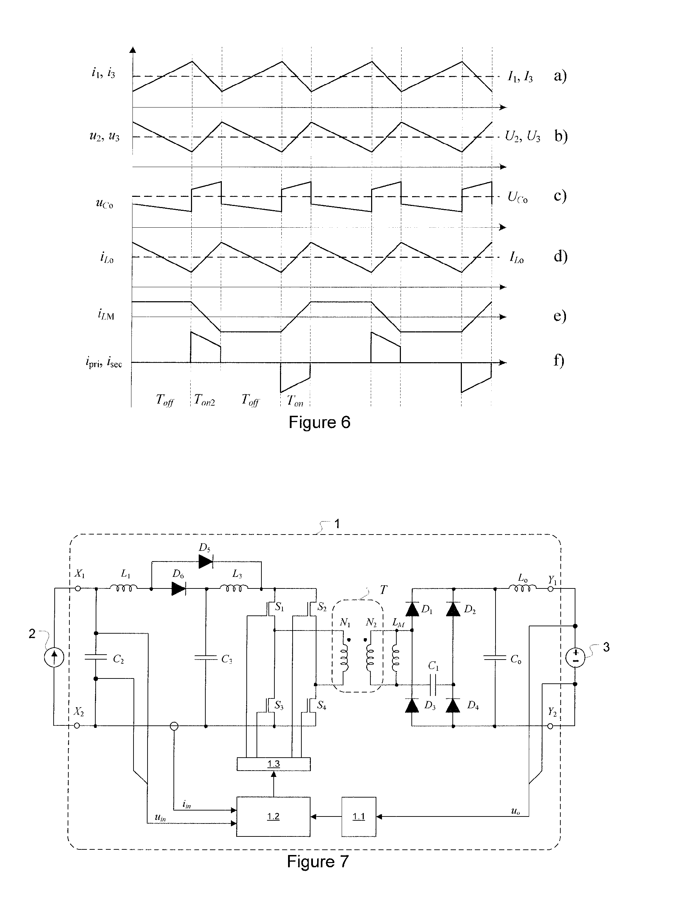

Figure 6 illustrates approximate waveforms of capacitor voltages and inductor currents. Average voltages $U_x$ and currents $I_x$ are represented by dashed lines, and instantaneous voltages $u_x$ and currents $i_x$ are represented by solid lines. The vertical dashed lines divide Figure 6 into repeating operation cycle sections $T_{off}$, $T_{on}$, and $T_{on2}$, which represent the off-time state cycle and the first and second on-time state cycles, respectively. The approximate waveform of the currents of the inductors $L_1$ and $L_3$ is shown as a curve (a) where the on-time and off-time state slopes can be given as

$$m_{L1,\text{ON}} = -nD(D-1)U_o / L_1$$
$$m_{L1,\text{OFF}} = nD^2 U_o / L_1 \qquad\qquad (6)$$
$$m_{L3,\text{ON}} = n(D-1)U_o / L_3$$
$$m_{L3,\text{OFF}} = nDU_o / L_3 .$$

The corresponding peak-to-peak ripple currents can be given as

$$\Delta i_{L1-pp} = m_{L1,\text{ON}}DT_s , \qquad\qquad (7)$$
$$\Delta i_{L3-pp} = m_{L3,\text{ON}}DT_s .$$

The corresponding average currents $I_{L1}$ and $I_{L3}$ are defined in (5). The selection of the inductors $L_1$, $L_3$ can be carried out based on the defined ripple and average currents.

The approximate waveforms of the capacitor voltages $u_{C2}$ and $u_{C3}$ are shown in Figure 6 as a curve (b) exhibiting a triangle shape. The on-time and off-time state slopes can be given for the capacitor $C_2$ as

$$m_{C2,\text{ON}} = (1-D)I_{in} / C_2 ,$$
$$m_{C2,\text{OFF}} = -DI_{in} / C_2 \qquad\qquad (8)$$

as well as for the capacitor $C_3$ as

$$m_{C3,\text{ON}} = DI_{in} / C_3 ,$$
$$m_{C3,\text{OFF}} = -DI_{in} / C_3 . \qquad\qquad (9)$$

According to the defined slopes (9), the peak-to-peak ripples associated with the capacitors can be determined by

$$\Delta u_{Ci-pp} = m_{Ci,\text{ON}}DT_s . \qquad\qquad (10)$$

The average voltages $U_{Ci}$ are defined in (5). The selection of the capacitors can be carried out according to the defined peak-to-peak ripple and average voltages.

The approximate waveform of the capacitor $C_o$ voltage $u_{Co}$ is shown in Figure 6 as a curve (c). The on-time and off-time state slopes can be given for the capacitor $C_o$ as

$$m_{Co,ON} = nD(1-D)I_{in}/C_o ,$$
$$m_{Co,OFF} = -D^2 I_{in}/C_o .$$

(11)

According to the defined slope in (11), the peak-to-peak ripple associated with the capacitor $C_o$ can be determined by

$$\Delta u_{Co-pp} = m_{Co,ON} DT_s .$$

(12)

The average voltage $U_{Co}$ is defined in (5). The selection of the capacitor can be carried out according to the defined peak-to-peak ripple and average voltage.

The approximate waveform of the current of inductor $L_o$ is shown in Figure 6 as a curve (d) based on the voltage appearing across it which is the ripple voltage of the capacitor $C_o$ specified previously. The corresponding average current $I_{Lo}$ is defined in (5). The ripple current of the inductor $L_o$ is small and can be usually neglected when sizing the inductor. The peak-to-peak ripple current can be given by

$$\Delta i_{Lo-pp} = m_{Co,ON} DT_s^2 /(8L_o)$$

(13)

based on the change in the flux linkage of the inductor. The selection of the inductor can be based on the ripple and average currents.

The approximate waveform of the main transformer magnetizing inductor $L_M$ current $i_{LM}$ is shown in Figure 6 as a curve (e) with its distinctive shape. Since the magnetizing inductor is placed on the secondary side of the transformer T, the rising and falling slopes of the current during the on-time states can be defined as

$$m_{LM,UP} = U_o / L_M ,$$
$$m_{LM,DOWN} = -U_o / L_M$$

(14)

whereas during the off-time state the current slope is zero. Therefore, the peak-to-peak magnetizing current can be defined as

$$\Delta i_{LM-pp} = m_{LM,UP} DT_s .$$

(15)

The magnetizing current $i_{LM}$ adds to the transformer winding currents $i_{pri}$ and $i_{sec}$, which are shown in Figure 6 as a curve (f).

The input voltage of the converter is pulsating and therefore, an EMI filter may be needed for producing the average voltage ($\approx nD^2 U_o$) at its input. The capacitor $C_2$ and the inductor $L_1$ effectively form this kind of filter and no additional filter is required. Moreover, the primary side rectifying devices $D_5$, $D_6$ can be replaced with controlled switches in order to minimize conduction losses.

Figure 7 illustrates an embodiment of the present invention. The inputs of a converter according to the present invention are connected to a solar generator 2. Owing to the constant-current nature of the solar generator, the current-fed converter of the present invention is highly suitable for interfacing with the generator. A high voltage DC bus 3 acts as a load. In the embodiment of Figure 7, all rectifying devices are diodes and all switching devices are power MOSFETs.

As stated in (5), a transformer-isolated current-fed quadratic full-bridge converter as illustrated in Figure 7 has such steady-state conversion ratios that the steady-state input current $I_{in}$ is reflected to the steady-state output current $I_o$ multiplied by the turns ratio $n= N_1 / N_2$ and the square of the duty ratio D as follows:

$$I_o = \frac{N_1}{N_2} D^2 I_{in}.$$    (16)

The output voltage $U_o$ is reflected to the input $U_{in}$ with the same conversion ratio:

$$U_{in} = \frac{N_1}{N_2} D^2 U_o.$$    (17)

By selecting properly the turns ratio $n= N_1 / N_2$, a high overall conversion ratio as well as controlling range can be obtained.

The inductor $L_1$ and the capacitor $C_2$ form an input-side EMI filter, which produces the average of the input voltage reflected from the output voltage.

The converter 1 comprises means for measuring the input voltage $u_{in}$, means for measuring the input current $i_{in}$, means 1.1 for measuring the output voltage $u_o$, and a control means 1.2. The means 1.1 for measuring the output voltage $u_o$ also provide a galvanic isolation between the output voltage and the controller 1.2. The converter comprises means 1.3 for controlling the switching devices.

The control means 1.2 outputs a control signal, and a value of the control signal is determined on the basis of the measured voltages and currents. Means 1.3 for controlling the switching devices then control the switching devices on the basis of the control signal.

The control means 1.2 are arranged such that the input voltage $u_{in}$ is kept at a level corresponding to maximum power by a feedback controller and a maximum power tracker.

The maximum power tracker may, for instance, determine the maximum power point on the basis of the measured input current $i_{in}$. The tracker then determines a reference for the input voltage $u_{in}$. The feedback controller adjusts the input voltage $u_{in}$ to correspond to the voltage reference.

If the output voltage $u_o$ exceeds a predetermined level, an output-voltage feedback loop using the means 1.2 reduces automatically the output current to keep the output voltage $u_o$ constant.

It will be obvious to a person skilled in the art that, the inventive concept can be implemented in various ways. The invention and its embodiments are not limited to the examples described above but may vary within the scope of the claims.

**Claims**

1.  A switching converter (1) comprising
    a first input terminal ($X_1$) and a second input terminal ($X_2$), both adapted to be connected to a current source (2),
    a first output terminal ($Y_1$) and a second output terminal ($Y_2$), both adapted to be connected to a load (3) and
    a transformer (T) with a primary winding, a secondary winding and a galvanic isolation between the windings, wherein the primary winding comprises two terminals and the secondary winding comprises two terminals, **characterized in that** the converter (1) further comprises
    a primary side first capacitor ($C_2$) connected between the first input terminal ($X_1$) and the second input terminal ($X_2$),
    a primary side first inductor ($L_1$) with two terminals, connected from its first terminal to the first input terminal ($X_1$),
    a primary side second inductor ($L_3$) with two terminals,
    a primary side first rectifying device ($D_5$) connected between the primary side first inductor ($L_1$) second terminal and the primary side second inductor ($L_3$) second terminal, thus allowing a flow of current from the primary side first inductor ($L_1$) second terminal to the primary side second inductor ($L_3$) second terminal,
    a primary side second rectifying device ($D_6$) connected between the primary side first inductor ($L_1$) second terminal and the primary side second inductor ($L_3$) first terminal, thus allowing a flow of current from the primary side first

8

inductor ($L_1$) second terminal to the primary side second inductor ($L_3$) first terminal,
a primary side second capacitor ($C_3$) connected between the second inductor ($L_3$) first terminal and the second input terminal ($X_2$),
a first switching device ($S_1$) connected between the primary side second inductor ($L_3$) second terminal and the transformer (T) primary winding first terminal and adapted to be able to set the connection between the primary side second inductor ($L_3$) second terminal and the transformer (T) primary winding first terminal to a conducting and a non-conducting state,
a second switching device ($S_2$) connected between the primary side second inductor ($L_3$) second terminal and the transformer (T) primary winding second terminal and adapted to be able to set the connection between the primary side second inductor ($L_3$) second terminal and the transformer (T) primary winding second terminal to a conducting and a non-conducting state,
a third switching device ($S_3$) connected between the transformer (T) primary winding first terminal and second input terminal ($X_2$) and adapted to be able to set the connection between the transformer (T) primary winding first terminal and the second input terminal ($X_2$) to a conducting and a non-conducting state,
a fourth switching device ($S_4$) connected between the transformer (T) primary winding second terminal and the second input terminal ($X_2$) and adapted to be able to set the connection between the transformer (T) primary winding second terminal and the second input terminal ($X_2$) to a conducting and a non-conducting state,
a secondary side rectifying means for rectifying a current of the transformer (T) secondary winding,
a secondary side filtering means for filtering a current between the rectifier means and a converter output, and
means (1.1, 1.2, 1.3) for controlling a voltage between the input terminals.

2.  A switching converter (1) according to claim 1, **characterized in that** the secondary side filtering means comprises
a secondary side first inductor ($L_o$) with two terminals, connected from its second terminal to the first output terminal ($Y_1$),
a secondary side first capacitor ($C_o$) connected between the secondary side first inductor ($L_o$) first terminal and the second output terminal ($Y_2$), and **in that** the secondary side rectifying means comprises
a secondary side first rectifying device ($D_1$) connected between the transformer (T) secondary winding first terminal and the secondary side first inductor ($L_o$) first terminal, thus allowing a flow of current from the transformer (T) secondary winding first terminal to the secondary side first inductor ($L_o$) first terminal,
a secondary side second rectifying device ($D_2$) connected between the transformer (T) secondary winding second terminal and the secondary side first inductor ($L_o$) first terminal, thus allowing a flow of current from the transformer (T) secondary winding second terminal to the secondary side first inductor ($L_o$) first terminal,
a secondary side third rectifying device ($D_3$) connected between the second output terminal ($Y_2$) and the transformer (T) secondary winding first terminal, thus allowing a flow of current from the second output terminal ($Y_2$) to the transformer (T) secondary winding first terminal,
a secondary side fourth rectifying device ($D_4$) connected between the second output terminal ($Y_2$) and the transformer (T) secondary winding second terminal, thus allowing a flow of current from the second output terminal ($Y_2$) to the transformer (T) secondary winding second terminal.

3.  A switching converter (1) according to claim 2, **characterized in that** the connection between the transformer (T) secondary winding second terminal and the secondary side second and fourth rectifying device ($D_2$, $D_4$) comprises a secondary side second capacitor ($C_1$).

4.  A switching converter (1) according to any one of claims 1 to 3, **characterized in that** the current source (2) is a solar generator.

5.  A switching converter (1) according to any one of claims 1 to 4, **characterized in that** the load (3) is essentially a DC bus.

6.  A switching converter (1) as claimed in any one of claims 1 to 5, **characterized in that** the means for controlling the voltage between the input terminals comprise
means for measuring an input voltage ($u_{in}$),
means for measuring an input current ($i_{in}$),
means for measuring an output voltage ($u_o$),
control means for determining a value of a control signal on the basis of the measured voltages and currents, and
means for controlling the switching devices on the basis of the control signal.

7.  A method for controlling a voltage between input terminals of a switching converter (1) as claimed in any one of claims 1 to 5, **characterized in that** the method comprises steps of
measuring a input voltage ($u_{in}$),
measuring a input current ($i_{in}$),
measuring a output voltage ($u_o$),
determining a value of a control signal on the basis of the measured voltages and currents, and
controlling the switching devices on the basis of the control signal.

8. A method according to claim 7, **characterized in that** the method comprises steps of
determining a maximum power point,
keeping the input voltage at a level corresponding to the maximum power point and, if the output voltage exceeds a predetermined level,
reducing an output current to keep the output voltage constant.

Figure 1

Figure 2

Figure 3

Figure 4

Figure 5

Figure 6

Figure 7

## EUROPEAN SEARCH REPORT

Application Number

EP 10 17 3167

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 03/105327 A2 (KONINKL PHILIPS ELECTRONICS NV [NL]; HONTELE BERTRAND J E [NL]) 18 December 2003 (2003-12-18) * abstract; page 8: last sentence * | 1,2,4-8 | INV. H02M3/335 |
| Y | MORALES-SALDAN~A J A ET AL: "Multiloop controller design for a quadratic boost converter", 20070501, vol. 1, no. 3, 1 May 2007 (2007-05-01), pages 362-367, XP006028610, * Introductionfigure 1 * | 1,2,4-8 | |
| Y | LEPPÄAHO J ET AL: "Solar-Generator-Interfacing with a Current-Fed Superbuck Converter Implemented by Duality-Transformation Methods", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 680-687, XP002614878, ISBN: 978-1-4244-5394-8 * III. Dynamic modeling; page 680, column 2; figure 3 * | 6-8 | TECHNICAL FIELDS SEARCHED (IPC)<br><br>H02M |

The present search report has been drawn up for all claims

| Place of search | Date of completion of the search | Examiner |
|---|---|---|
| Munich | 14 February 2011 | Hanisch, Thomas |

EPO FORM 1503 03.82 (P04C01)

## ANNEX TO THE EUROPEAN SEARCH REPORT
## ON EUROPEAN PATENT APPLICATION NO.

EP 10 17 3167

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2011

| Patent document cited in search report | | Publication date | Patent family member(s) | | Publication date |
|---|---|---|---|---|---|
| WO 03105327 | A2 | 18-12-2003 | AU | 2003232986 A1 | 22-12-2003 |
| | | | CN | 1659773 A | 24-08-2005 |
| | | | EP | 1522137 A2 | 13-04-2005 |
| | | | JP | 2005529578 T | 29-09-2005 |
| | | | US | 2005173615 A1 | 11-08-2005 |

EPO FORM P0459

For more details about this annex : see Official Journal of the European Patent Office, No. 12/82